# FASCICULE DE BREVET EUROPEEN

(11) **EP 0 545 761 B1**
(45) Date de publication et mention de la délivrance du brevet: **06.09.1995**
(21) Numéro de dépôt: 92403124.8
(22) Date de dépôt: 20.11.1992
(51) Int. Cl.: G01M 7/06, G09B 9/14

(54) **Plateforme vibrante trois axes, en particulier pour simulateur d'hélicoptère**
Plattform, schwingend entlang drei Achsen, insbesondere für einen Hubschraubersimulator
Platform vibrating in three directions, in particular for a helicopter simulator

(30) Priorité: 29.11.1991 FR 9114815
(43) Date de publication de la demande: 09.06.1993
(73) Titulaire: THOMSON-CSF, 75008 Paris (FR)
(72) Inventeur: Laforest, Jacques, Thomson-CSF, SCPI, F-92402 Courbevoie Cedex (FR); Le Guillou, René, Thomson-CSF, SCPI, F-92402 Courbevoie Cedex (FR)
(74) Mandataire: Chaverneff, Vladimir

(56) Documents cités:
- WO-A-87/02601
- GB-A- 1 350 941
- US-A- 3 304 628
- US-A- 4 265 123
- US-A- 4 446 742
- US-A- 4 875 374

## Description

La présente invention se rapporte à une plateforme vibrante trois axes, en particulier pour simulateur d'hélicoptère.

Les hélicoptères sont soumis en vol à de nombreuses vibrations qui peuvent se décomposer en composantes selon trois axes orthogonaux. Pour que les simulateurs d'hélicoptères soient suffisamment réalistes, il est nécessaire qu'ils puissent reproduire ces composantes selon les trois axes orthogonaux.

On connaît des plateformes vibrantes comportant, pour chacun des trois axes vibratoires trois ou quatre vérins hydrauliques de commande. Ces vérins, avec leurs conduites hydrauliques, ont un encombrement important, et leur nombre rend le simulateur onéreux.

La présente invention a pour objet une plateforme vibrante trois axes, d'encombrement le plus réduit possible, simple à réaliser, et de prix de revient le plus faible possible.

La plateforme vibrante conforme à l'invention, de forme générale sensiblement rectangulaire, comporte quatre points de fixation de dispositifs de suspension, le premier point étant sensiblement au milieu d'un côté de la plateforme, les trois autres étant répartis le long du côté opposé de la plateforme, l'un sensiblement au milieu du côté, et les deux autres à proximité des extrémités de ce côté, le premier point de fixation étant relié à trois dispositifs de suspension dirigés selon trois axes orthogonaux, les autres points de fixation étant reliés chacun à un dispositif de suspension, ceux des extrémités étant dirigés verticalement, et le dernier horizontalement, de préférence transversalement, au moins les dispositifs de suspension du premier point de fixation étant des vérins dont les tiges sont prolongées par des biellettes articulées à leurs deux extrémités, les autres étant, le cas échéant, des biellettes articulées à leurs deux extrémités.

La présente invention sera mieux comprise à la lecture de la description détaillée d'un mode de réalisation, pris à titre d'exemple non limitatif, et illustré par le dessin annexé, dont la figure unique est une vue schématique simplifiée, en perspective, d'une plateforme vibrante conforme à l'invention.

La plateforme vibrante décrite ci-dessous est celle d'un simulateur d'hélicoptère, mais il est bien entendu que l'invention n'est pas limitée à une telle application, et peut être mise en oeuvre dans d'autres applications nécessitant des mouvements vibratoires selon trois axes orthogonaux, et d'amplitude relativement élevée (jusqu'à 20 cm environ, par exemple).

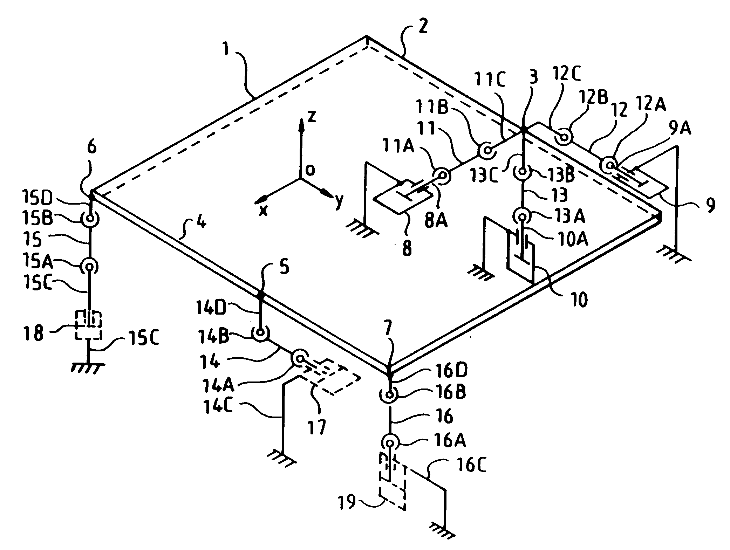

Sur la figure 1, on a représenté très schématiquement une plateforme rectangulaire 1. On suppose qu'au repos la plateforme 1 est horizontale. On définit des axes de coordonnées rectangulaires Ox, Oy, Oz tels que Ox et Oy soient dans un plan horizontal, Ox étant parallèle à l'axe longitudinal de la plateforme 1, et Oz étant vertical. On suppose que le côté transversal 2 de la plateforme correspond à l'avant de l'hélicoptère simulé.

On forme au milieu du côté 2 un point de fixation 3 de suspensions. Sur le côté opposé 4, on forme trois points de fixation 5 à 7 de suspensions. Le point 5 est au milieu du côté 4, et les points 6 et 7 à chacune des extrémités de ce côté.

Les dispositifs de suspension relatifs au point 3 sont trois vérins hydrauliques 8 à 10 dont les tiges respectives sont dirigées parallèlement à Ox, Oy et Oz. Les corps de ces vérins sont fixés au sol ou à un support fixe tel qu'une dalle épaisse de béton. Leurs tiges 8A, 9A, 10A, respectivement sont reliées au point 3 par l'intermédiaire de biellettes identiques de préférence, 11 à 13 respectivement, articulées de préférence à rotule à leurs deux extrémités (rotules respectivement référencées 11A à 13A côté tiges de vérins et 11B à 13B côté fixation 3). Les rotules 11B à 13B sont fixées à la plateforme 1 par de courts bras 11C à 13C. Au repos (plateforme 1 horizontale), les biellettes 11 à 13 sont dans le prolongement des tiges de vérins 8A à 10A respectivement. Le point 3 n'est pas nécessairement un point au sens mathématique, mais peut être une zone d'une étendue la plus faible possible de préférence, dans laquelle on fixe à la plateforme 1 les bras 11C à 13C des rotules 11B à 13B.

Chacun des points 5 à 7 est relié au sol par une biellette, 14 à 16 respectivement. Ces biellettes sont de préférence identiques et articulées de préférence à rotule à leurs deux extrémités. Les rotules côté sol sont référencées 14A à 16A, et côté plateforme, 14B à 16B. Au repos, les biellettes 15 et 16 sont verticales, et la biellette 14 horizontale. Dans le cas présent, la biellette 14 est parallèle à Oy. Les rotules 14A à 16A sont reliées au sol par des bras 14C à 16C respectivement, et les rotules 14B à 16B sont reliées à la plateforme 1 par des bras 14D à 16D respectivement.

Pour simuler les mouvements vibratoires subis par une cabine d'hélicoptère, il suffit d'appliquer des mouvements vibratoires, à l'aide des vérins 8 à 10, au point 3 situé à l'avant de la plateforme. Cependant, dans d'autres applications, il peut être nécessaire d'appliquer également des mouvements vibratoires à l'arrière de la plateforme. Dans ce dernier cas, ainsi que représenté en traits interrompus sur la figure 1, on insère des vérins 17 à 19 entre les rotules 14A à 16A et les bras de support 14C à 16C, de façon que les tiges de ces vérins soient dans le prolongement des biellettes correspondantes.

Pour comprendre le fonctionnement du dispositif de l'invention, on suppose que les vérins sont bloqués en position de repos (plateforme 1 horizontale, tiges des vérins rentrées ou éventuellement à mi-course). Bien que la plateforme 1 ne soit supportée que par des biellettes rotulées à leurs deux extrémités, elle ne peut ni bouger ni basculer, ni vriller du fait qu'elle est immobilisée dans le plan horizontal par les trois biellettes 13, 15 et 16, et dans la direction Ox par la biellette 11 et dans la direction Oy par les deux biellettes 12 et 14.

## Revendications

1. Plateforme vibrante trois axes, de forme générale sensiblement rectangulaire (11), caractérisée par le fait qu'elle comporte quatre points de fixation (3, 5, 6, 7) de dispositif de suspension (8 à 19), le premier point (3) étant sensiblement au milieu d'un côté (2) de la plateforme, les trois autres étant répartis le long du côté opposé (4) de la plateforme, l'un (5) sensiblement au milieu du côté, et les deux autres (6, 7) à proximité des extrémités de ce côté, le premier point de fixation étant relié à trois dispositifs de suspension dirigés selon trois axes orthogonaux, les autres points de fixation étant reliés chacun à un dispositif de suspension, ceux des extrémités (15, 16) étant dirigés verticalement, et le dernier horizontalement (14), au moins les dispositifs de suspension du premier point de fixation étant des vérins (8 à 10) dont les tiges sont prolongées par des biellettes (11 à 13) articulées à leurs deux extrémités, les autres étant, le cas échéant, des biellettes (14 à 16) articulées à leurs deux extrémités.

2. Plateforme selon la revendication 1, caractérisée par le fait que les biellettes sont articulées à rotule.

3. Plateforme selon la revendication 1 ou 2, caractérisée par le fait que le dispositif de suspension relatif au point de fixation de milieu (5) du côté comportant trois points de fixation est dirigé transversalement.

## Patentansprüche

1. Dreiachsig schwingende Plattform (11) mit einer im wesentlichen allgemein rechteckigen Gestalt, dadurch gekennzeichnet, daß sie vier Befestigungspunkte (3, 5, 6, 7) für Aufhängungsvorrichtungen (8 bis 19) umfaßt, wobei sich der erste Punkt (3) im wesentlichen in der Mitte einer Seite (2) der Plattform befindet und wobei die drei anderen entlang der entgegengesetzten Seite (4) der Plattform verteilt sind, und zwar einer (5) im wesentlichen in der Mitte der Seite und die beiden anderen (6, 7) in der Nähe der Enden dieser Seite, wobei der erste Befestigungspunkt mit drei Aufhängungsvorrichtungen verbunden ist, die entlang dreier zueinander orthogonaler Achsen ausgerichtet sind, wobei die anderen Befestigungspunkte jeweils mit einer Aufhängungsvorrichtung verbunden sind, von denen diejenigen (15, 16) der Enden vertikal ausgerichtet sind und die verbleibende Aufhängungsvorrichtung (14) horizontal ausgerichtet ist, wobei wenigstens die Aufhängungsvorrichtungen des ersten Befestigungspunktes Stellzylinder (8 bis 10) sind, deren Stangen durch Schwingarme (11 bis 13) verlängert sind, die an ihren beiden Enden angelenkt sind, wobei die anderen Aufhängungsvorrichtungen gegebenenfalls Schwingarme (14 bis 16) sind, die an ihren beiden Enden angelenkt sind.

2. Plattform nach Anspruch 1, dadurch gekennzeichnet, daß die Schwingarme mittels Kugelgelenken angelenkt sind.

3. Vorrichtung nach Anspruch 1 oder 2, dadurch gekennzeichnet, daß die Aufhängungsvorrichtung, die zu dem Befestigungspunkt (5) in der Mitte der die drei Befestigungspunkte enthaltenden Seite gehört, quer ausgerichtet ist.

## Claims

1. Triaxial vibrating platform, of substantially rectangular general shape (11), characterized in that it includes four points (3, 5, 6, 7) for fixing a suspension device (8 to 19), the first point (3) being substantially in the middle of one side (2) of the platform, the other three being distributed along the opposite side (4) of the platform, one (5) substantially in the middle of the side, and the other two (6, 7) in proximity to the ends of this side, the first fixing point being linked to three suspension devices directed along three orthogonal axes, the other fixing points each being linked to a suspension device, those at the ends (15, 16) being directed vertically, and the last horizontally (14), at least the suspension devices of the first fixing point being jacks (8 to 10) the rods of which are extended by link rods (11 to 13) articulated at their two ends, the others being, as the case may be, link rods (14 to 16) articulated at their two ends.

2. Platform according to Claim 1, characterized in that the link rods are articulated with a ball joint.

3. Platform according to Claim 1 or 2, characterized in that the suspension device relating to the fixing point of the middle (5) of the side including three fixing points is directed transversely.
